# EUROPEAN PATENT SPECIFICATION

(11) **EP 0 825 118 B1**
(45) Date of publication and mention of the grant of the patent: **29.10.2003**
(21) Application number: 97113987.8
(22) Date of filing: 13.08.1997
(51) Int. Cl.: B65B 63/02, B65G 47/31

(54) **Method of forming groups of packets**
Verfahren zum Bilden von Gruppen von Paketen
Procédé pour former des groupes de paquets

(30) Priority: 20.08.1996 IT BO960441
(43) Date of publication of application: 25.02.1998
(73) Proprietor: G.D SOCIETA' PER AZIONI, 40133 Bologna (BO) (IT)
(72) Inventor: Draghetti, Fiorenzo, 40059 Medicina (IT); Osti, Roberto, 40069 Zola Predosa (IT); Boldrini, Fulvio, 44100 Ferrara (IT); Biondi, Andrea, 40100 Bologna (IT)
(74) Representative: Boggio, Luigi

(56) References cited:
- EP-A- 0 685 392
- DE-A- 2 514 792

## Description

The present invention relates to a method of forming groups of packets.

As described, for example, in European Patent Application n. 685,392, groups of packets of cigarettes are formed by feeding a succession of spaced packets along a path extending through a grouping station; feeding the packets to the station, along which they are gradually arrested and compacted against one another to form a group of packets; and withdrawing the groups from the grouping station, and feeding them, spaced, to a supply station for supply to a follow-up, normally a cartoning, machine.

The above method involves several drawbacks. In particular, formation of the groups takes a relatively long time, owing to the temporary stoppage in the travel of the packets. And, since the grouping station must be fully cleared before the next group can be formed, the total length of the path along which the packets are fed is considerable, thus further increasing the operating time required.

DE2514792 discloses a regulating system for goods moving on conveyor, which has goods moving on a plurality of subsequent endless belt conveyors operated at different speeds; however, such regulating system is relatively complicated and also cumbersome due to the presence of a plurality of subsequent endless belt conveyors.

It is an object of the present invention to provide a straightforward, low-cost method of forming groups of packets, designed to overcome the aforementioned drawbacks.

According to the present invention, there is provided a method of forming groups of packets as recited by Claim 1.

A number of non-limiting embodiments of the present invention will be described by way of example with reference to the accompanying drawings, in which:
Figure 1 shows a plan view, with parts in section and parts removed for clarity, of a first preferred embodiment of a packet supply line implementing the method according to the present invention;
Figure 2 shows a side view, with parts in section and parts removed for clarity, of the Figure 1 line;
Figure 3 shows a plan view, with parts in section and parts removed for clarity, of the Figure 1 line in a different operating condition;
Figure 4 shows a section along line IV-IV in Figure 3;
Figure 5 shows a detail of Figure 3 in two different operating positions;
Figure 6 shows a plan view, with parts in section and parts removed for clarity, of the Figure 1 line in a further operating condition;
Figure 7 shows a section along line VII-VII in Figure 6;
Figure 8 shows a plan view, with parts in section and parts removed for clarity, of a second preferred embodiment of a packet supply line implementing the method according to the present invention;
Figure 9 shows a side view, with parts in section and parts removed for clarity, of the Figure 8 line;
Figure 10 shows a plan view, with parts in section and parts removed for clarity, of the Figure 8 line in a different operating condition;
Figure 11 shows a detail of Figure 10 in two different operating positions.

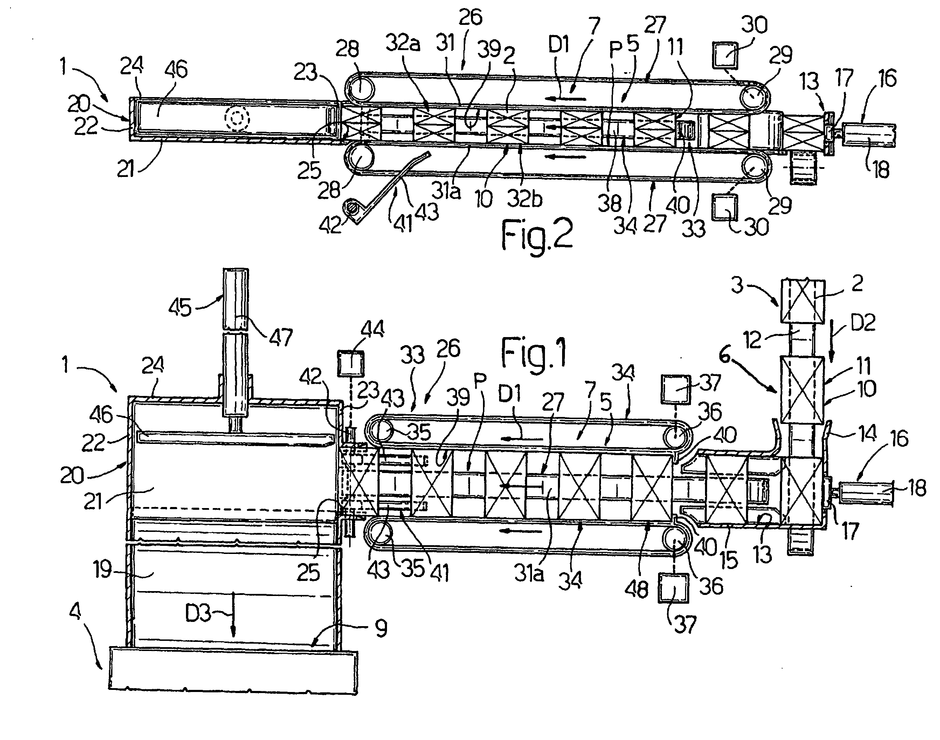

Number 1 in Figure 1 indicates a line for supplying packets 2 of cigarettes (not shown), and which, in the embodiment shown, is located between a machine 3, e.g. a cellophaning machine, and a known cartoning machine 4, receives a succession 5 of spaced packets 2 from an output conveyor 6 of machine 3, feeds succession 5 in a given direction D1 and along a path P extending through a grouping station 7, and provides, along station 7, for forming packets 2 into groups 8 of packets 2, and for supplying groups 8 to an input 9 of machine 4.

In the Figure 1 and 2 embodiment, packets 2 in succession 5 are arranged contacting in pairs, so as to form a succession of pairs 10 of packets 2, in which the packets 2 in each pair 10 are arranged one on top of the other, and are fed along path P with respective small lateral surfaces 11 crosswise to direction D1; pairs 10 are spaced in relation to one another; and each group 8 comprises a given number N of pairs 10 of packets 2 arranged side by side along surfaces 11. In the embodiment shown, each group 8 comprises 5 pairs of packets 2.

Output conveyor 6 comprises an endless belt 12 for feeding pairs 10 in a direction D2 crosswise to direction D1; and an L-shaped channel 13, the input portion 14 of which extends parallel to direction D2 over belt 12, and the output portion 15 of which extends partly along path P and parallel to direction D1. Conveyor 6 also comprises a diverting device 16 located to the side of input portion 14 of channel 13, and in turn comprising a piston 17 movable parallel to direction D1, and a linear actuator 18 for so moving piston 17 as to successively engage surfaces 11 of pairs 10 arriving in direction D2, and diverting pairs 10 in direction D1.

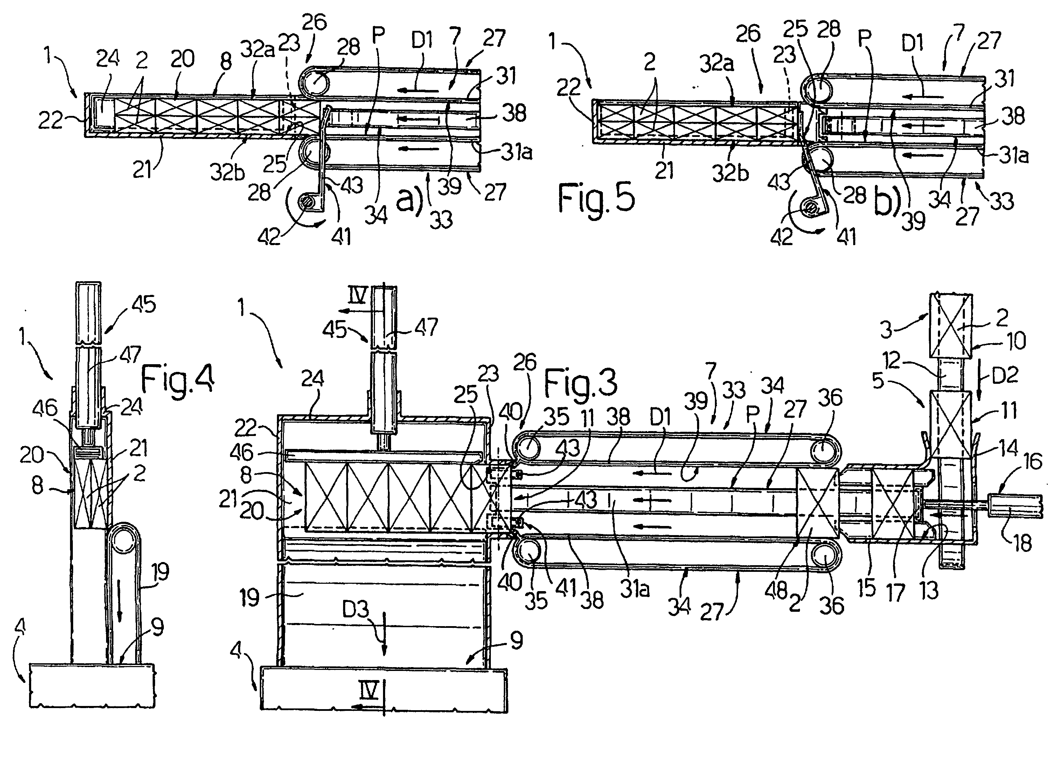

As shown in Figure 3, input 9 of machine 4 is defined by a conveyor belt 19, which feeds groups 8, parallel to surfaces 11 of packets 2, in a direction D3 crosswise to direction D1, and extends in direction D3 from an unloading station 20 for unloading groups 8 and located along path P, downstream from station 7 in direction D1. More specifically, station 20 forms part of line 1, and comprises a horizontal plate 21 coplanar with the conveying branch of belt 19; two vertical walls 22 and 23 crosswise to direction D1 and on either side of plate 21; and a further vertical wall 24 joining walls 22 and 23, and located on the opposite side of plate 21 to belt 19. Wall 23 comprises an opening 25 for the passage of packets 2, and for enabling supply of groups 8 to station 20.

Line 1 comprises a conveying device 26 extending along path P from output portion 15 of channel 13 to input 9 of machine 4, and in turn comprising a pair of conveyor belts 27 facing each other on either side of path P, and looped about respective pulleys 28 and 29 rotating about respective horizontal axes. Pulleys 29 are drive pulleys connected to respective motors 30 and respectively located over and beneath output portion 15 of channel 13, while pulleys 28 are idle pulleys facing wall 23 at opening 25.

Pulleys 28 and 29 define, on belts 27, respective horizontal conveying branches 31 of a width smaller than the width of packets 2, and which cooperate with respective large lateral surfaces 32 of each pair 10 of packets 2 to feed pairs 10 along path P at a given traveling speed V1. More specifically, surfaces 32 are crosswise to surfaces 11, and correspond to an upper surface, indicated 32a, and to a lower surface, indicated 32b, of each pair 10; and the lower branch 31, indicated 31a, is coplanar with plate 21.

Line 1 also comprises a compacting device 33 located along station 7, and which provides for compacting pairs 10 of packets 2 into groups 8 as packets 2 travel, in use, along station 7, and for simultaneously forming and supplying groups 8 to station 20.

More specifically, compacting device 33 comprises two conveyor belts 34 located on either side of belts 27 and looped about respective pulleys 35 and 36 rotating about respective vertical axes. Pulleys 36 are drive pulleys connected to respective motors 37 and located substantially at the output end of output portion 15 of channel 13, while pulleys 35 are idle pulleys located facing and a given distance from wall 23 at opening 25.

Pulleys 35 and 36 define, on belts 34, respective vertical conveying branches 38 crosswise to branches 31, and which define, with branches 31, a channel 39 for feeding packets 2 parallel to direction D1, and are separated by a distance substantially equal to the width of packets 2. Belts 34 each comprise at least one transverse projection 40 for engaging the rear surfaces 11 of packets 2 in the last pair 10 of packets 2 in each group 8, and feed projections 40 in time with each other along station 7 at a grouping speed V2 higher than speed V1, so as to accelerate packets 2 and compact pairs 10 one after the other, commencing with the last pair 10 in each group 8. Compacting device 33 also comprises a fork 41, which is hinged to a shaft 42 extending crosswise to direction D1 and fitted for rotation in known manner to wall 23, beneath opening 25, and comprises two arms 43 separated by a distance greater than the width of branches 31. Shaft 42 is connected to a motor 44, and provides for rotating fork 41 between a lowered position (Figures 1 and 2) in which arms 43 are located substantially beneath branch 31a, and a raised position (Figures 3, 5, 6 and 7) in which arms 43 are positioned substantially vertically above branch 31a and contacting surfaces 11 of packets 2 of the last pair 10 in group 8 to complete the supply of group 8 through opening 25 to station 20. As already stated, pulleys 35 are located a given distance from wall 23 to enable projections 40, in use, to release packets 2 and rotate about pulleys 35, and fork 41 cooperates with belts 34 to complete the supply of each group 8 to station 20 in lieu of projections 40 along the portion of path P between pulleys 35 and wall 23.

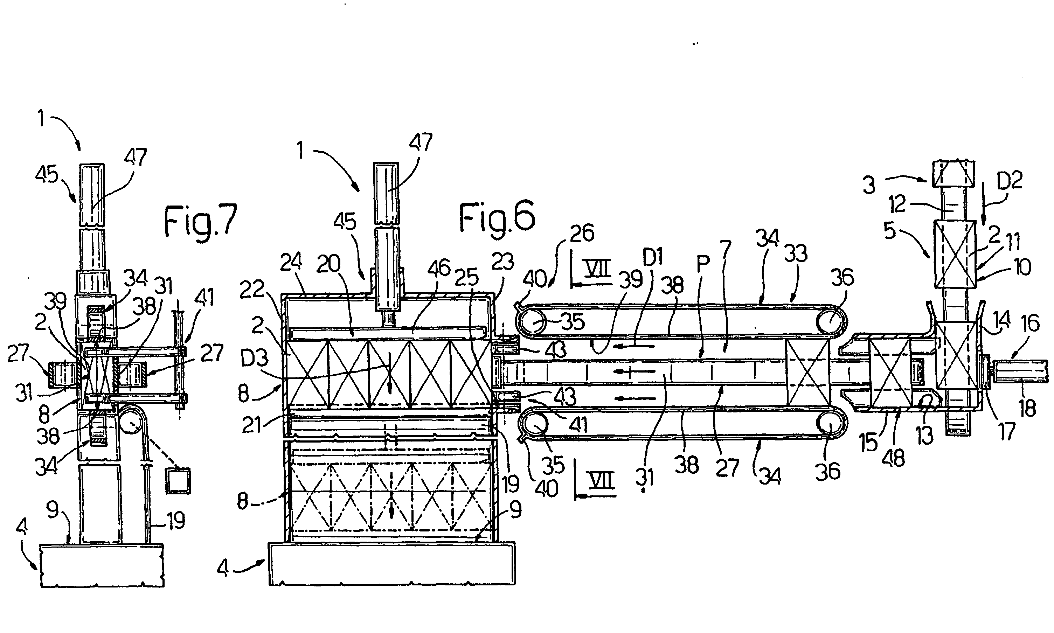

Finally, line 1 comprises an unloading device 45 fitted to wall 24, and for clearing station 20 by feeding group 8 on to belt 19. Device 45 comprises a vertical plate 46 of a width substantially equal to the length of group 8, extending parallel to wall 24 and movable in direction D3; and a linear actuator 47 connected to plate 46, and for moving plate 46, in direction D3, between a withdrawn position (shown by the continuous line in Figures 3, 4 and 6) in which plate 46 is located upstream from path P in direction D3, and an unloading position (shown by the dotted line in Figure 6) in which plate 46 is located downstream from path P in direction D3 and substantially over belt 19.

In actual use, pairs 10 of packets 2 are fed successively to device 26 by diverting device 16, the piston 17 of which feeds pairs 10 on to conveying branch 31a of belt 27, and are fed by device 26 along path P and through station 7. Belts 27 of device 26 feed pairs 10 forward at speed V1, and cooperate with large lateral surfaces 32 of pairs 10, so that the respective end surfaces 48 of each pair 10 are left free. Motors 30 of belts 27 and motors 37 of belts 34 are operated in time with one another so that, by the time N number of pairs 10 are fed into station 7, projections 40 enter channel 39 and engage the small lateral surfaces 11 of packets 2 in the last pair 10 forming group 8.

By virtue of the traveling speed V2 of projections 40 through station 7, projections 40 push pairs 10 of packets 2 against one another, commencing with the last pair 10 in each group 8 being formed, so as to gradually compact pairs 10 as packets 2 travel at speed V1 through station 7. As belts 27 continue feeding pairs 10 towards unloading station 20, by the time the first pair 10 of packets 2 in group 8 has practically been fed into station 20, the last pair 10 in the same group 8 is pushing and compacting the intermediate pairs 10 and also feeding them into station 20.

As the last pair 10 substantially reaches opening 25, projections 40 release surfaces 11, and, at the same time, arms 43 of fork 41 rotate about shaft 42 to complete the supply of group 8 to station 20. Once all the pairs 10 in group 8 have been fed into station 20, unloading device 45 is activated, the plate 46 of which is moved by actuator 47 in direction D3 to push group 8 on to conveyor belt 19.

As conveyor belts 27 operate continuously, pairs 10 of packets 2 continue traveling through station 7 as group 8 is being formed, thus minimizing the time interval between the formation of one group 8 and the next.

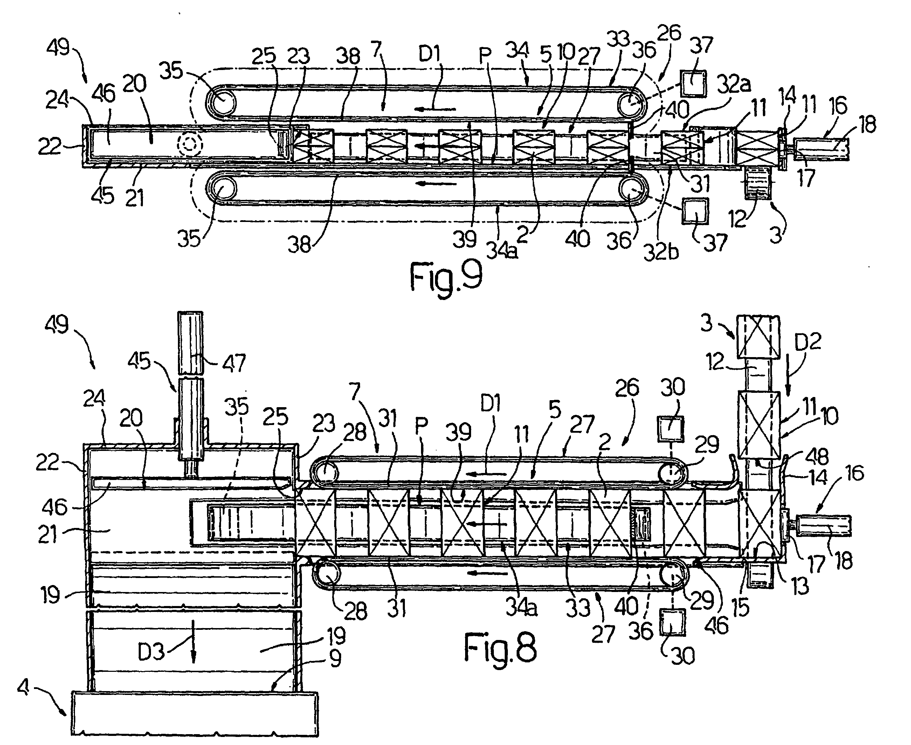

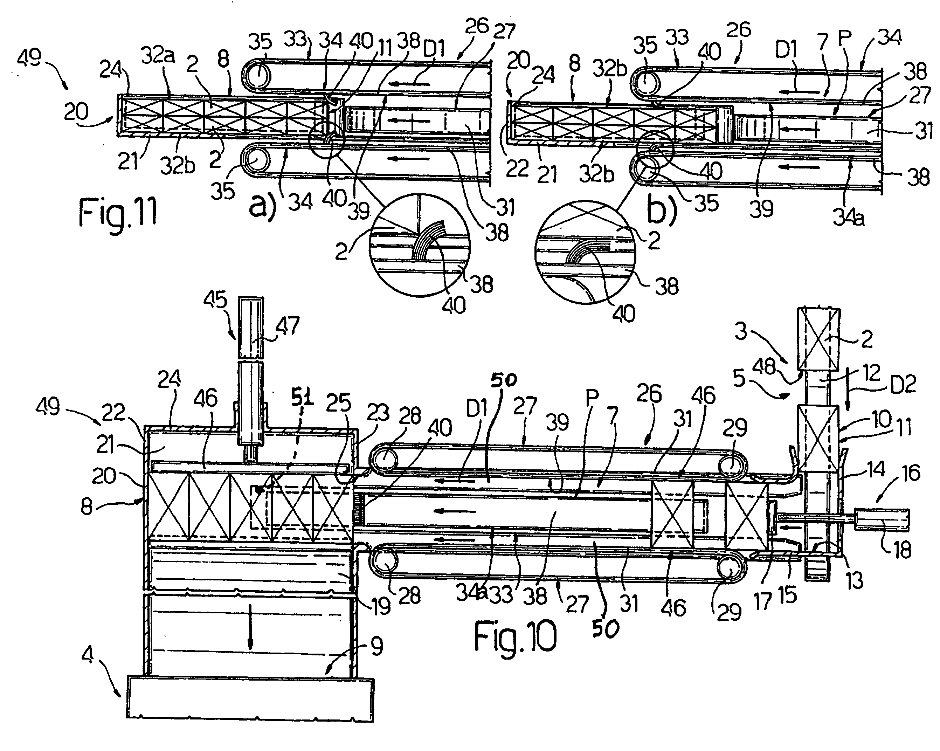

The embodiment shown in Figures 8 to 11 relates to a supply line 49 similar to line 1, except that: pulleys 28 and 29 of conveyor belts 27 rotate about respective vertical axes, so that conveying branches 31 are positioned vertically, are separated by a distance substantially equal to the width of packets 2, and feed packets 2 along path P by cooperating with end surfaces 48 of packets 2 and leaving surfaces 32 free; and pulleys 35 and 36 of conveyor belts 34 rotate about respective horizontal axes, so that conveying branches 38 are positioned horizontally over and beneath path P.

Line 49 also comprises two flat guides 50 extending along station 7 and located directly beneath and crosswise to branches 31 to further support packets 2. Guides 50 are also located on either side of the belt 34 beneath path P and indicated 34a, and are connected to plate 21, which comprises a through opening 51 extending partly inside station 20 and engaged by conveying branch 38 of belt 34a. On line 49, in fact, fork 41 of line 1 is dispensed with, and each group 8 is fed entirely into station 20 by belts 34, the conveying branches of which extend inside station 20.

More specifically, and as shown in the enlarged details in Figure 11, projections 40 are defined by respective flexible brushes, which flex and slide along surfaces 32 of pairs 10 of packets 2 as group 8, in use, is fed completely inside station 20.

Operation of line 49 may be deduced, with no further explanation, from what has already been said in connection with line 1.

It should be pointed out that, according to a variation not shown, both lines 1 and 49 may also be used to advantage in the event succession 5 comprises single packets 2 as opposed to pairs of packets 2 as in the examples shown.

## Claims

1. A method of forming groups of packets, the method comprising the steps of feeding a succession (5) of packets (2) along a path (P) extending through a grouping station (7), the packets (2) in the succession (5) being spaced in relation to one another; and compacting the packets (2) at the grouping station (7) to form a group (8) of packets (2) as the packets (2) travel through said grouping station (7); the method being **characterized in that** the packets (2) are fed along said path (P) at a given traveling speed (V1), and the compacting step is performed by engaging at least one of the packets (2) in each group (8) via engaging means (40) traveling through said grouping station (7) at a grouping speed (V2) greater than said traveling speed (V1).

2. A method as claimed in Claim 1, and comprising the further step of feeding each group (8) to an unloading station (20) located downstream from the grouping station (7) along said path (P); the step of feeding each group (8) to the unloading station (20) being performed substantially simultaneously with the step of compacting the packets (2) in the group (8).

3. A method as claimed in Claim 1 or 2, wherein said engaging means (40) compact the packets (2) in each group (8) commencing from the last packet (2) in the group (8) along said path (P).

4. A method as claimed in Claim 3, wherein said packets (2) are arranged in pairs (10) in said succession (5); the packets (2) in each pair (10) of packets (2) being arranged contacting each other.

5. A method as claimed in Claim 4, wherein the packets (2) in each pair (10) of packets (2) are arranged one on top of the other; said engaging means (40) engaging a rear surface (11) of the last pair (10) of packets (2) in the group (8) along said path (P).

6. A method as claimed in Claim 5, wherein the packets (2) in each pair (10) of packets (2) are fed along said path (P) by conveying means (27) located on either side of the path (P); the conveying means (27) cooperating with at least one side (32; 48) of each pair (10) of packets (2), said side (32; 48) being crosswise to said rear surface (11).

7. A method as claimed in Claim 6, **characterized in that** said conveying means cooperate with two sides (32; 48) of each pair (10) of packets (2), said sides (32; 48) being crosswise to said rear surface (11) and parallel to each other.

8. A method as claimed in Claim 7, wherein said sides (32) are defined by an upper lateral surface (32a) and a lower lateral surface (32b) of each pair (10) of packets (2).

9. A method as claimed in Claim 7, wherein said sides (32) are defined by two end surfaces (48) of each pair (10) of packets (2).

## Patentansprüche

1. Verfahren zur Bildung von Gruppen von Packungen, mit den Verfahrensschritten
Zufuhr einer Aufeinanderfolge (5) von Packungen (2) entlang eines Pfades (P), der sich durch eine Gruppierstation (7) erstreckt, wobei die Packungen (2) in der Aufeinanderfolge (5) voneinander beabstandet sind, und
Kompaktierung der Packungen (2) an der Gruppierstation (7) zur Bildung einer Gruppe (8) von Packungen (2), wenn sich die Packungen (2) durch die Gruppierstation (7) bewegen,
**dadurch gekennzeichnet,**
**dass** die Packungen (2) entlang dem Pfad (P) mit einer gegebenen Vorschubgeschwindigkeit (V1) bewegt werden, und dass die Kompaktierung durch Greifen mindestens einer Packung (2) in jeder Gruppe (8) mittels Greifeinrichtungen (40) durchgeführt wird, die sich durch die Gruppierstation (7) mit einer Grupplergeschwindigkeit (V2) bewegen, die größer ist als die Vorschubgeschwindigkeit (V1).

2. Verfahren nach Anspruch 1 mit dem weiteren Verfahrensschritt der Zufuhr jeder Gruppe (8) zu einer Entladestation (20), die entlang des Pfades (P) stromabwärts von der Grupplerstation (7) vorgesehen ist, wobei der Verfahrensschritt der Zufuhr jeder Gruppe (8) zur Entladestation (20) im wesentlichen simultan mit dem Verfahrensschritt der Kompaktierung der Packungen (2) in der Gruppe (8) durchgeführt wird.

3. Verfahren nach Anspruch 1 oder 2, wobei die Eingreifeinrichtungen (40) die Packungen (2) in jeder Gruppe (8), beginnend mit der entlang des Pfades (P) letzten Packung in der Gruppe (8), kompaktieren.

4. Verfahren nach Anspruch 3, wobei die Packungen (2) in Paaren (10) in der Aufeinanderfolge (5) angeordnet werden, wobei die Packungen (2) in jedem Paar (10) von Packungen (2) so angeordnet werden, dass sie einander berühren.

5. Verfahren nach Anspruch 4, wobei die Packungen (2) in jedem Paar (10) Packungen (2) jeweils aufeinander angeordnet werden, wobei die Eingreifeinrichtungen (40) eine Rückenfläche (11) des entlang des Pfades (P) letzten Paares (10) Packungen (2) in der Gruppe (8) greifen.

6. Verfahren nach Anspruch 5, wobei die Packungen (2) in jedem Paar (10) von Packungen (2) entlang des Pfades (P) mittels Fördereinrichtungen (27) zugeführt werden, die an beiden Seiten des Pfades (P) vorgesehen sind, wobei die Fördereinrichtungen (27) mit mindestens einer Seite (32; 48) jedes Paares (10) von Packungen (2) zusammenwirken, wobei die Seite (32; 48) zur Rückenfläche (11) quer orientiert ist.

7. Verfahren nach Anspruch 6,
**dadurch gekennzeichnet,**
**dass** die Fördereinrichtungen mit zwei Seiten (32; 48) jedes Paares (10) von Packungen (2) zusammenwirken, wobei die Seiten (32; 48) quer zur Rückenfläche (11) und parallel zueinander orientiert sind.

8. Verfahren nach Anspruch 7, wobei die Seiten (32) durch eine obere Seitenfläche (32a) und eine untere Seitenfläche (32b) jedes Paares (10) von Packungen (2) bestimmt sind.

9. Verfahren nach Anspruch 7, wobei die Seiten (32) durch zwei Endflächen (48) jedes Paares (10) von Packungen (2) bestimmt sind.

## Revendications

1. Procédé de formation de groupes de paquets, le procédé comprenant les étapes qui consistent à faire avancer une suite (5) de paquets (2) le long d'un trajet (P) s'étendant à travers un poste (7) de groupage, les paquets (2) de la suite (5) étant espacés les uns des autres ; et à tasser les paquets (2) dans le poste (7) de groupage pour former un groupe (8) de paquets (2) pendant que les paquets (2) se déplacent à travers ledit poste (7) de groupage ; le procédé étant **caractérisé en ce que** les paquets (2) sont avancés le long dudit trajet (P) à une vitesse de déplacement donnée (V1), et l'étape de tassement est exécutée en engageant au moins l'un des paquets (2) de chaque groupe (8) par l'intermédiaire d'un moyen d'engagement (40) se déplaçant à travers ledit posté (7) de groupage à une vitesse (V2) de groupage supérieure à ladite vitesse (V1) de déplacement.

2. Procédé selon la revendication 1, et comprenant en outre l'étape qui consiste à faire avancer chaque groupe (8) jusqu'à un poste (20) de déchargement placé en aval du poste (7) de groupage le long dudit trajet (P) ; l'étape d'avance de chaque groupe (8) jusqu'au poste (20) de déchargement étant exécutée sensiblement en même temps que l'étape de tassement des paquets (2) dans le groupe (8).

3. Procédé selon la revendication 1 ou 2, dans lequel lesdits moyens d'engagement (40) tassent les paquets (2) dans chaque groupe (8) en commençant par le dernier paquet (2) dans le groupe (8) le long dudit trajet (P).

4. Procédé selon la revendication 3, dans lequel lesdits paquets (2) sont agencés par paires (10) dans ladite suite (5), les paquets (2) de chaque paire (10) de paquets (2) étant agencés en contact l'un avec l'autre.

5. Procédé selon la revendication 4, dans lequel les paquets (2) de chaque paire (10) de paquets (2) sont agencés l'un au-dessus de l'autre ; lesdits moyens d'engagement (40) engageant une surface arrière (11) de la dernière paire de paquets (2) dans le groupe (8) le long dudit trajet (P).

6. Procédé selon la revendication 5, dans lequel les paquets de chaque paire (10) de paquets (2) sont avancés le long dudit trajet (P) par les moyens de transport (27) disposés des deux côtés du trajet (P) ; les moyens de transport (27) coopérant avec au moins un côté (32 ; 48) de chaque paire (10) de paquets (2), ledit côté (32 ; 48) étant transversal à ladite surface arrière (11).

7. Procédé selon la revendication 6, **caractérisé en ce que** lesdits moyens de transport coopèrent avec deux côtés (32 ; 48) de chaque paire (10) de paquets (2), lesdits côtés (32 ; 48) étant transversaux à ladite surface arrière (11) et parallèles entre eux.

8. Procédé selon la revendication 7, dans lequel lesdits côtés (32) sont définis par une surface latérale supérieure (32a) et une surface latérale inférieure (32b) de chaque paire (10) de paquets (2).

9. Procédé selon la revendication 7, dans lequel lesdits côtés (32) sont définis par deux surfaces extrêmes (48) de chaque paire (10) de paquets (2).
